# EUROPEAN PATENT SPECIFICATION

(11) **EP 0 496 515 B1**
(45) Date of publication and mention of the grant of the patent: **23.08.1995**
(21) Application number: 92300276.0
(22) Date of filing: 13.01.1992
(51) Int. Cl.: F02F 11/00, B23P 19/04, F02F 7/00

(54) **Combination of a gasket and a positioning pin**
Kombination aus Abdichtungsplatte und Positionierstift
Combinaison d'une bague d'étanchéité et d'un goujon de positionnement

(30) Priority: 24.01.1991 US 645978; 08.04.1991 US 681700
(43) Date of publication of application: 29.07.1992
(73) Proprietor: ISHIKAWA GASKET CO. LTD., Tokyo (JP)
(72) Inventor: Udagawa, Tsunekazu, Ichikawa-shi (JP); Inamura, Susumu, Edogawa-ku, Tokyo (JP)
(74) Representative: Goddard, David John

(56) References cited:
- EP-A- 0 371 579
- DE-A- 3 210 377
- DE-A- 3 321 425

## Description

### Background of the Invention and Related Art Statement

The present invention relates to a positioning pin or dowel attached to an engine block of an internal combustion engine for setting a location of a gasket.

When engine parts are assembled with a gasket, a lower engine part is placed on a floor or a platform. Since the lower engine part is provided with dowels for setting a location of the gasket, the gasket is placed on the lower engine part so that the dowels are located in dowel holes of the gasket. Then, an upper engine part is placed above the gasket, and the two engine parts are tightened together by bolts.

In order to easily assemble the gasket on the lower engine part, the diameter or size of the dowel hole of the gasket is slightly larger than the diameter of the dowel. Therefore, in case the lower engine part with the gasket is shaken, the gasket may disengage from the lower engine part.

Especially, in a V engine, gasket attaching surfaces of the lower engine part incline downwardly. Therefore, even if gaskets are installed on the gasket attaching surfaces of the lower engine part, the gaskets are liable to disengage from the lower engine part.

In an automatic assembly line of engines, the engines are continuously or consecutively moved. When the upper engine part is assembled on the lower engine part with the gasket, in some cases, the engine parts are stopped for a while for assembly.

In the V engine, in case the lower engine part with the gasket is consecutively moved and stopped, the gasket may fall from the lower engine part. In the automatic assembly line, it is troublesome to check the gasket in each engine, and install a gasket in case no gasket is placed on the lower engine part.

In a positioning pin or dowel, there has not been made any device for preventing a gasket from disengaging from an engine part.

DE-A-3321425 describes a gasket having a bushing attached thereto to secure the gasket to an engine cylinder block. The bushings are permanently fixed to the gasket and are frictionally located in bores formed for the purpose in the cylinder block.

Accordingly, one object of the invention is to provide a positioning pin for preventing accidental disengagement of a gasket from an engine part as well as exactly setting a location of the gasket.

Another object of the invention is to provide a positioning pin as stated above, to which a gasket can be easily installed.

A further object of the invention is to provide a positioning pin as stated above, which can be easily and economically manufactured.

Further objects and advantages of the invention will be apparent from the following description of the invention.

### Summary of the invention

According to the present invention, there is provided a combination of a gasket and a positioning pin having a body portion fixed to an engine part in advance for installing the gasket in a predetermined position,
whereby an upper portion of the body portion of the positioning pin includes an upper large diameter portion formed at a top end thereof and at least one small diameter portion formed under the upper large diameter portion,
said combination being characterized in that said upper portion, when the gasket is installed by placing the gasket over the upper portion, being located inside a positioning hole of the gasket, and a portion of the gasket around the positioning hole being able to enter into the small diameter portion and being blocked by the large diameter portion to prevent accidental disengagement of the gasket from the positioning pin.

Generally, at least two positioning pins are attached to the engine part.

The positioning pin may further include a lower large diameter portion under the small diameter portion, i.e. an annular groove, and above an upper surface of the engine part. When the positioning hole of the gasket engages the lower large diameter portion, the gasket is properly positioned.

In case the lower large diameter portion has a diameter substantially equal to that of a position setting hole of a plate of the gasket for setting location of the gasket, the gasket is precisely positioned when the position setting hole of the plate engages the lower large diameter portion. The lower large diameter portion may include a tapered edge at a side of the small diameter portion. Accordingly, the gasket can readily enter into the lower large diameter portion.

The upper large diameter portion may extend upwardly beyond the gasket for setting a position of an engine part situated above the gasket. The upper large diameter portion may have a diameter substantially equal to that of the position setting hole of the gasket. Accordingly, the gasket can be precisely positioned by the upper large diameter portion.

### Brief Description of the Drawings

Fig. 1 is a plan view of a part of a gasket installed on a cylinder block;
Fig. 2 is an enlarged section view taken along line 2-2 in Fig. 1, wherein a first embodiment of a positioning pin of the invention is shown;
Fig. 3 is a section view similar to Fig. 2 for showing a condition that a gasket engages the positioning pin;
Fig. 4 is a side view of a part of a second embodiment of a positioning pin of the invention; and
Figs. 5 and 6 are section views similar to Fig. 3 for showing third and fourth embodiments of a positioning pin of the invention.

### Detailed Description of Preferred Embodiments

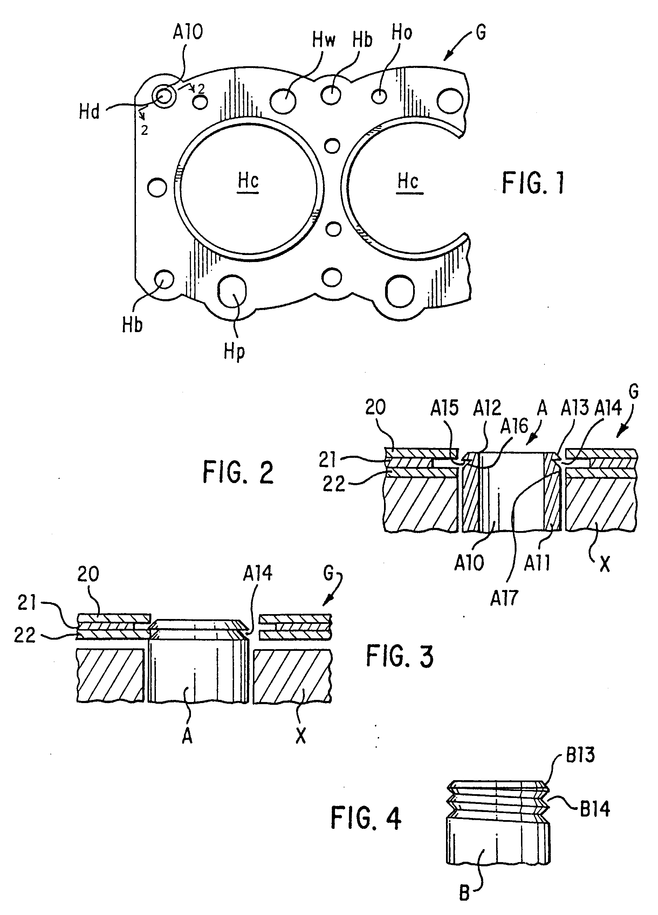

Fig. 1 shows a steel laminate gasket G installed on a cylinder block X with positioning pins A or dowels of the present invention. The gasket G is a cylinder head gasket, and includes a plurality of cylinder bores Hc, water holes Hw, oil holes Ho, bolt holes Hb and push rod holes Hp, as in the conventional gasket.

The gasket G includes two positioning holes Hd (one is shown in Fig. 1). When the gasket G is installed on the cylinder block X, the positioning pins A attached to the cylinder block X are located in the positioning holes Hd of the gasket G.

In the gasket G, one of the bolt holes Hb is made large to constitute the positioning hole Hd, in which the positioning pin A is located when the gasket G is installed on the cylinder block X. When an engine is assembled, a bolt (not shown) passes through the positioning pin A and connects a cylinder head (not shown) and the cylinder block X.

As shown in Figs. 1-3, the positioning pin A has a cylindrical hollow shape and includes a hole A10 therein for allowing a bolt to pass therethrough. The positioning pin A is formed of a lower part A11 and an upper part A12.

When the positioning pin A is installed on the cylinder block X, the lower part A11 is attached to or fixed inside the cylinder block X, and the upper part A12 projects outwardly from an upper surface of the cylinder block X.

The upper part A12 includes a tapered edge A13, a groove A14 formed of an upper horizontal wall A15 and an inclined wall A16, and a cylindrical portion A17. The cylindrical portion A17 is located under the groove A14 and above the lower part A11, i.e. above an upper surface of the cylinder block X.

The tapered edge A13 is formed at an upper end of the positioning pin A, so that the positioning hole of the gasket can be easily placed over the positioning pin A. Since the positioning pin A includes the horizontal wall A15 and inclined wall A16, the gasket G can easily pass over the groove A14 but the gasket is prevented from disengaging from the positioning pin A.

The cylindrical portion A17 has an outer diameter substantially the same as an inner diameter of a positioning portion or hole of the gasket G. Therefore, when the gasket G engages the cylindrical portion A17, the gasket G is properly positioned on the cylinder block X.

In the embodiment as shown in Figs. 1-3, the gasket G is a steel laminate gasket including an upper plate 20, a middle plate 21 and a lower plate 22. The size of a hole in the lower plate 22 is substantially the same as the outer diameter of the cylindrical portion A17 of the positioning pin A. Therefore, when the hole of the lower plate 22 engages the cylindrical portion A17 of the positioning pin A, the gasket G is located in a proper position.

Also, the width of the groove A14 is made larger than the thickness of the middle plate 21 or the lower plate 22. Accordingly, when the gasket G slips out of the positioning pin A, one of the plates 21, 22, especially the lower plate 22 in Figs. 2 and 3, engages the groove A14.

In the positioning pin A, a portion defined by the tapered edge A13 and the horizontal wall A15 constitutes an upper large diameter portion relative to the groove A14 and operates to prevent the gasket from disengaging from the positioning pin A.

Fig. 3 shows a condition that the gasket G engages the groove A14 of the positioning pin A. In particular, when the cylinder block X with the gasket G as shown in Fig. 2 is transferred on an assembly line and is stopped, the gasket G may jump up from or slip out of the cylinder block X. At this time, since the positioning pin A is provided with the groove A14, the lower plate 23 of the gasket G enters into or engages the groove A14. Accordingly, the gasket G is prevented from disengaging from the positioning pin A and is kept on the cylinder block X.

Fig. 4 shows a second embodiment B of a positioning pin of the invention. The positioning pin B includes a tapered edge B13 at an upper end of the positioning pin B, and a spiral groove B14. A bottom of the spiral groove B14 is located in the middle between the threads. The distance between the threads is larger than the thickness of the plate of the gasket. Accordingly, the positioning pin B can hold the gasket G when the gasket G slips out of the engine block X.

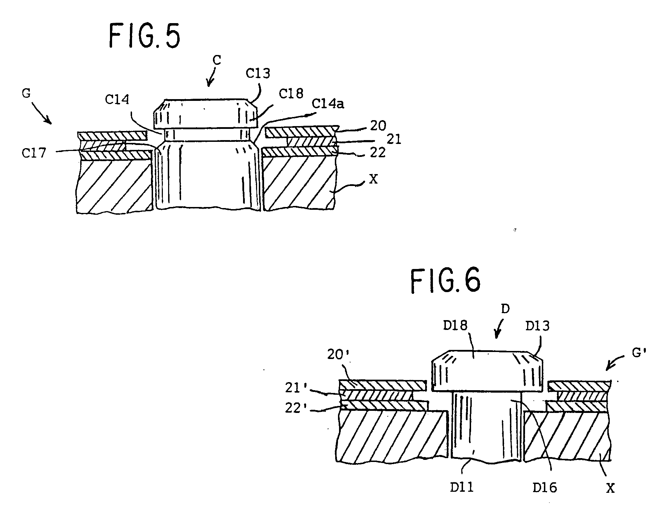

Fig. 5 shows a third embodiment C of a positioning pin of the invention. The positioning pin C includes an upper large diameter portion C18 with a tapered edge C13, a groove C14, and a lower large diameter portion C17.

In the positioning pin C, when the gasket G is installed on the cylinder block X, the upper large diameter portion C18 extends upwardly beyond the gasket G to operate as a positioning pin for a cylinder head (not shown). Therefore, when the cylinder head is situated above the gasket G, the cylinder head is situated at the proper position relative to the gasket G and the cylinder block X.

In the positioning pin C, the groove C14 is made wide and includes the tapered edge C14a. Therefore, when the gasket G is installed on the cylinder block X, the gasket G can easily pass over the positioning pin C. Also, the gasket G can be caught easily by the groove C14 and is blocked by the upper large diameter portion C18 when the gasket G happens to slip out of the positioning pin C. Even if the tapered edge C14a is not formed, the gasket G can be installed and blocked properly.

In the positioning pin C, the lower large diameter portion C17 has a diameter substantially the same as that of a position setting hole of the gasket G. Therefore, when the gasket G engages the lower large diameter portion C17, the gasket G is properly positioned on the cylinder block X.

The positioning pin C of the invention can set the position of the gasket G and the cylinder head relative to the cylinder block as well as prevent the gasket G from accidental disengagement from the cylinder block.

Fig. 6 shows a fourth embodiment D of a positioning pin of the invention. The positioning pin D includes a large diameter portion D18 with a tapered edge D13, a small diameter portion D16, and a lower part D11 fixed to the cylinder block X.

In the positioning pin D, the large diameter portion D18 has an outer diameter substantially the same as an inner diameter of a position setting hole of the gasket, i.e. plate 20′ of the gasket G′. Therefore, when the gasket G′ engages the large diameter portion D18, the gasket G′ is properly positioned on the cylinder block X. Also, the cylinder head (not shown) can be properly positioned by the large diameter portion D18.

In this embodiment, the gasket G′ further includes a middle plate 21′ and a lower plate 22′. When the gasket G′ is moved, one of the middle plate 21′ and the lower plate 22′ is located under the large diameter portion D18, so that the gasket G′ does not accidentally disengage from the positioning pin D.

In the positioning pin of the present invention, the positioning pin is attached to the engine part, and is provided with an upper large diameter portion at an upper portion of the pin, and a small diameter portion or a groove under the upper large diameter portion. When the gasket is accidentally slips out of the positioning pin, one of the plates of the gasket engages the small diameter portion or the gasket frictionally engages the small diameter portion.

Accordingly, accidental disengagement of the gasket from the engine part is securely prevented. Also, the gasket as well as the cylinder head can be positioned precisely by the positioning pin of the present invention.

While the invention has been explained with reference to the specific embodiments of the invention, the explanation is illustrative, and the invention is limited only by the appended claims.

## Claims

1. A combination of a gasket (G; G') and a positioning pin (A-D) having a body portion fixed to an engine part (X) in advance for installing the gasket in a predetermined position,
whereby an upper portion of the body portion of the positioning pin (A-D) includes an upper large diameter portion (A12; B13; C18; D18) formed at a top end thereof and at least one small diameter portion (A14; B14; C14; D16) formed under the upper large diameter portion,
said combination being characterized in that said upper portion, when the gasket is installed by placing the gasket over the upper portion, being located inside a positioning hole (Hd) of the gasket, and a portion of the gasket (G; G') around the positioning hole being able to enter into the small diameter portion (A14; B14; C14; D16) and being blocked by the large diameter portion (A12; B13; C18; D18) to prevent accidental disengagement of the gasket from the positioning pin.

2. A combination according to claim 1, wherein said small diameter portion is an annular groove (A14; B14; C14).

3. A combination according to claim 2, wherein said body further includes a lower large diameter portion (A17; C17) under the annular groove so that the gasket is properly positioned when the positioning hole of the gasket engages the lower large diameter portion.

4. A combination according to claim 1, wherein said small diameter portion is a groove in the spiral form (B14).

5. A combination according to claim 2, wherein said annular groove includes a horizontal upper wall (A15) extending inwardly from an outer surface of the body portion, and an inclined side wall (A16) extending downwardly from an inner edge of the horizontal upper wall to the outer surface of the body portion.

6. A combination according to either claim 1 or claim 3, wherein said upper large diameter portion (C18) extends outwardly beyond the gasket for setting a position of an engine part situated above the gasket.

7. A combination according to claim 3, wherein said lower large diameter portion (A17; C17) has a diameter substantially equal to that of a position setting hole of a plate of the gasket for setting location of the gasket so that when the position setting hole of the plate engages the lower large diameter portion, the gasket is precisely positioned.

8. A combination according to either claim 3 or claim 7, wherein said lower large diameter portion includes a tapered edge (A16; C14a) at a side of the small diameter portion (A14; C14) so that the gasket can readily enter onto the lower large diameter portion (A17; C17).

9. A combination according to claim 2, wherein said upper large diameter portion has a diameter substantially equal to that of a position setting hole of a plate of the gasket, said gasket further including a blocking plate situated under the upper large diameter portion to prevent disengagement of the gasket from the positioning pin.

10. A combination according to any one of preceding claims 1-9, wherein said body portion includes a tapered edge (A13; B13; C13; D13) at the top end to facilitate engagement of the positioning hole of the gasket with the positioning pin.

11. A combination according to any one of preceding claims 1-10, wherein the width of the small diameter portion at an inlet portion is wider than a plate for constituting the gasket.

## Patentansprüche

1. Kombination aus einer Dichtung (G; G') und einem Positionierungsstift (A-D), der einen Rumpfabschnitt aufweist, der an einem Motorteil (X) vor dem Einbau der Dichtung in einer vorbestimmten Lage befestigt ist, wobei ein oberer Abschnitt des Rumpfabschnitts des Positionierungsstiftes (A-D) einen oberen Abschnitt mit großem Durchmesser (A12; B13; C18; D18) umfaßt, der an seinem oberen Ende ausgebildet ist, und mindestens einen Abschnitt mit kleinem Durchmesser (A14; B14; C14; D16), der unter dem oberen Abschnitt mit großem Durchmesser ausgebildet ist, und wobei die genannte Kombination dadurch **gekennzeichnet** ist, daß der genannte obere Abschnitt, wenn die Dichtung durch Aufsetzen der Dichtung über dem oberen Abschnitt eingebaut wird, im Inneren eines Positionierungslochs (Hd) der Dichtung angeordnet ist, und ein Abschnitt der Dichtung (G; G') rund um das Positionierungsloch imstande ist, in den Abschnitt mit kleinem Durchmesser (A14; B14; C14; D16) zu gelangen und vom Abschnitt mit großem Durchmesser (A12; B13; C18; D18) gesperrt zu werden, um das versehentliche Lösen des Eingriffs der Dichtung mit dem Positionierungsstift zu verhindern.

2. Kombination nach Anspruch 1, worin der genannte Abschnitt mit kleinem Durchmesser eine Ringnut (A14; B14; C14) ist.

3. Kombination nach Anspruch 2, worin der genannte Rumpf weiter einen unteren Abschnitt mit großem Durchmesser (A17; C17) unter der Ringnut aufweist, so daß die Dichtung ordnungsgemäß angeordnet ist, wenn das Positionierungsloch der Dichtung in den unteren Abschnitt mit großem Durchmesser eingreift.

4. Kombination nach Anspruch 1, worin der genannte Abschnitt mit kleinem Durchmesser eine Nut in Spiralform (B14) ist.

5. Kombination nach Anspruch 2, worin die genannte Ringnut eine horizontale obere Wand (A15) umfaßt, die sich von einer Außenoberfläche des Rumpfabschnitts aus einwärts erstreckt, und eine geneigte Seitenwand (A16), die sich von einer Innenkante der horizontalen oberen Wand nach unten zur Außenoberfläche des Rumpfabschnitts hin erstreckt.

6. Kombination nach entweder Anspruch 1 oder Anspruch 3, worin der genannte obere Abschnitt mit großem Durchmesser (C18) sich nach außen über die Dichtung hinaus erstreckt, um eine Lage eines Motorteils festzulegen, das über der Dichtung gelegen ist.

7. Kombination nach Anspruch 3, worin der genannte untere Abschnitt mit großem Durchmesser (A17; C17) einen Durchmesser hat, der im wesentlichen gleich ist dem eines Lage-Festsetzloches einer Platte bzw. eines Blechs der Dichtung, um die Lage der Dichtung so festzusetzen, daß dann, wenn das Lage-Festsetzloch des Blechs in den unteren Abschnitt mit großem Durchmesser eingreift, die Dichtung präzise positioniert ist.

8. Kombination nach entweder Anspruch 3 oder Anspruch 7, worin der genannte untere Abschnitt mit großem Durchmesser eine verjüngte Kante (A16; C14a) an der Seite des Abschnitts mit kleinem Durchmesser (A14; C14) aufweist, so daß die Dichtung ohne weiteres auf den unteren Abschnitt mit großem Durchmesser (A17; C17) auflaufen kann.

9. Kombination nach Anspruch 2, worin der genannte obere Abschnitt mit großem Durchmesser einen Durchmesser aufweist, der im wesentlichen gleich ist dem eines Positions-Festsetzloches einer Platte der Dichtung, wobei die genannte Dichtung ferner eine Sperrplatte aufweist, die unter dem oberen Abschnitt mit großem Durchmesser gelegen ist, um das Lösen des Eingriffs der Dichtung mit dem Positionierungsstift zu verhindern.

10. Kombination nach irgendeinem der vorangehenden Ansprüche 1 bis 9, worin der genannte Rumpfabschnitt eine verjüngte Kante (A13; B13; C13; D13) am oberen Ende aufweist, um den Eingriff des Positionierungsloches der Dichtung in den Positionierungsstift zu erleichtern.

11. Kombination nach irgendeinem der vorangehenden Ansprüche 1 bis 10, worin die Breite des Abschnitts mit kleinem Durchmesser an einem Eintrittsabschnitt breiter ist als ein Blech zur Bildung der Dichtung.

## Revendications

1. Combinaison d'un joint (G ; G') et d'un goujon de positionnement (A-D) possédant une partie de corps fixée à l'avance sur une partie de moteur (X) afin d'installer le joint dans une position prédéterminée, dans laquelle une partie supérieure de la partie de corps du goujon de positionnement (A-D) comprend une partie supérieure de grand diamètre (A12 ; B13 ; C18 ; D18) formée à son extrémité supérieure et au moins une partie de petit diamètre (A14; B14 ; C14 ; D16) formée en-dessous de la partie supérieure de grand diamètre, ladite combinaison étant caractérisée en ce que ladite partie supérieure, lorsque le joint est installé en le disposant par-dessus la partie supérieure, est située à l'intérieur d'un trou de positionnement (Hd) du joint, et une partie du joint (G ; G') entourant le trou de positionnement peut entrer dans la partie de petit diamètre (A14 ; B14 ; C14 ; D16) et être bloquée par la partie de grand diamètre (A12 ; B13 ; C18 ; D18) afin d'empêcher le joint de se détacher accidentellement du goujon de positionnement.

2. Combinaison selon la revendication 1, caractérisée en ce que ladite partie de petit diamètre est une rainure annulaire (A14 ; B14 ; C14).

3. Combinaison selon la revendication 2, caractérisée en ce que ledit corps comprend en outre une partie inférieure de grand diamètre (A17 ; C17) en-dessous de la rainure annulaire, afin que le joint soit correctement positionné lorsque son trou de positionnement se met en prise avec la partie inférieure de grand diamètre.

4. Combinaison selon la revendication 1, caractérisée en ce que ladite partie de petit diamètre est une rainure de forme spirale (B14).

5. Combinaison selon la revendication 2, caractérisée en ce que ladite rainure annulaire comprend une paroi supérieure horizontale (A15) qui s'étend vers l'intérieur à partir d'une surface extérieure de la partie formant corps, et une paroi latérale inclinée (A16) qui s'étend vers le bas à partir d'un bord intérieur de la paroi supérieure horizontale vers la surface extérieure de la partie formant corps.

6. Combinaison selon la revendication 1 ou la revendication 3, caractérisée en ce que ladite partie supérieure de grand diamètre (C18) s'étend vers l'extérieur au-delà du joint afin de fixer une position d'une partie de moteur située au-dessus du joint.

7. Combinaison selon la revendication 3, caractérisée en ce que ladite partie inférieure de grand diamètre (A17 ; C17) a un diamètre sensiblement égal à celui d'un trou de positionnement d'une plaque du joint destiné à fixer l'emplacement de joint de telle sorte que, lorsque le trou de positionnement de la plaque se met en prise avec la partie inférieure de grand diamètre, le joint soit exactement positionné.

8. Combinaison selon la revendication 3 ou la revendication 7, caractérisée en ce que ladite partie inférieure de grand diamètre comprend un bord effilé (A16 ; C14a) sur un côté de la partie de petit diamètre (A14 ; C14), de telle sorte que le joint puisse facilement passer sur la partie inférieure de grand diamètre (A17 ; C17).

9. Combinaison selon la revendication 2, caractérisée en ce que ladite partie supérieure de grand diamètre a un diamètre sensiblement égal à celui du trou de positionnement d'une plaque du joint, ledit joint comprenant en outre une plaque de blocage située en-dessous de la partie supérieure de grand diamètre afin d'empêcher le joint de se détacher du goujon de positionnement.

10. Combinaison selon l'une ou l'ensemble des revendications 1 à 9, caractérisée en ce que ladite partie de corps comprend un bord effilé (A13 ; B13 ; C13 ; D13) à son extrémité supérieure afin de faciliter la prise du trou de positionnement du joint sur le goujon de positionnement.

11. Combinaison selon l'une ou l'ensemble des revendications 1 à 10, caractérisée en ce que la largeur de la partie de petit diamètre dans une partie d'entrée est plus large qu'une plaque constituant le joint.
